# EUROPÄISCHE PATENTANMELDUNG

(11) **EP 1 396 522 A1**
(43) Veröffentlichungstag der Anmeldung: **10.03.2004**
(21) Anmeldenummer: 03018725.6
(22) Anmeldetag: 26.08.2003
(51) Int. Cl.: C08K 5/5313

(54) **Granulare Flammschutzmittelzusammensetzung**

(30) Priorität: 06.09.2002 DE 10241375
(71) Anmelder: Clariant GmbH, 65929 Frankfurt am Main (DE)
(72) Erfinder: Bauer, Harald, Dr., 50170 Kerpen (DE); Hörold, Sebastian, Dr., 86420 Diedorf (DE); Krause, Werner, Dr., 50354 Hürth (DE); Sicken, Martin, Dr., 51149 Köln (DE)
(74) Vertreter: Paczkowski, Marcus, Dr.

(57) **Zusammenfassung**

Die Erfindung betrifft eine granulare Flammschutzmittelzusammensetzung aus einer phosphororganischer Flammschutzkomponente und einem Binder, ein Verfahren zur Herstellung solcher Flammschutzmittelzusammensetzungen und Polymer-Formmassen, die solche Flammschutzmittelzusammensetzungen enthalten.

## Beschreibung

Die vorliegende Erfindung betrifft eine granulare Flammschutzmittelzusammensetzung sowie ein Verfahren zur Herstellung dieser granularen Flammschutzmittelzusammensetzung und deren Verwendung.

Phosphororganische Verbindungen finden Anwendung als Flammschutzmittel für Kunststoffe, wie z.B. Polyamide oder Polyester.

In den vorgenannten Anwendungsgebieten kann die Verarbeitung der phosphororganischen Flammschutzkomponente auf Grund ihrer geringen Schüttdichte erschwert sein. Eine geringe Schüttdichte erschwert den Einzug des Materials in kontinuierlich arbeitende Maschinen, insbesondere Extruder bei Kunststoff-Spritzgussmaschinen. Dies kann eine ungleichmäßige Verteilung des Materials im Polymer ergeben.

DE 196 50 563 A1 beschreibt Granulate enthaltend ein thermoplastisches Polymer, ein Pfropfpolymerisat, ein thermoplastisches Copolymerisat und ein Flammschutzmittel das seinerseits Iminophosphorane enthält.

EP 1 081 190 A1 beschreibt flammgeschützte thermoplastische Formmassen, enthaltend mindestens eine der Komponenten: hochmolekulares syndiotaktisches Polymer auf der Basis von vinylaromatischen Monomeren, Polyphenylenether, vinylaromatische amorphe Polymere und Flammschutzmittel

DE 41 39 625 A1 beschreibt ein Granulat bestehend aus Polyphenylenether, vinylaromatischen Polymeren und einem aromatischen Phosphit.

EP 0 899 296 A2 beschreibt Kunststoff-Formmassen, enthaltend eine synergistische Flammschutzmittel-Kombination für thermoplastische Polymere, die aus einem Salz von 1-Hydroxy-dihydrophospholoxiden und einer weiteren Komponente aus der Gruppe Benzoguanamin, Tris(hydroxyethyl)isocyanurat, Allantoin, Glycoluril sowie Melamincyanurat, Melaminphosphat, Dimelaminphosphat und Melaminpyrophosphat und Ammoniumpolyphosphat besteht.

US 5,021,488 A1 und US 5,102,931 A1 beschreiben thermoplastische, flammgeschützte, nichttropfende Polyamidzusammensetzungen, zu deren Herstellung Phosphinsäureester von Polyphenolen, Antitropfmittel, Polyfluoroethylenpolymer, Aramid und/oder Zinkborat (Hydrat) in granularer oder pulverförmiger Form eingesetzt werden können.

US 5,191,000 A1 beschreibt flammgeschützte, nichttropfende Polyalkylenterephthalat-Zusammensetzungen, zu deren Herstellung Phosphorigsäureester und Antitropfmittel in granularer oder pulverförmiger Form eingesetzt werden.

Es bestand somit die Aufgabe, die Nachteile des Standes der Technik zu vermeiden und die Verarbeitbarkeit von Flammschutzmittelzusammensetzungen zu verbessern. Erfindungsgemäß wird die Aufgabe gelöst, indem die phosphororganische Flammschutzkomponente mit einem Binder versetzt und granuliert wird. Überraschend wurde gefunden, dass die Gleichmäßigkeit der Verteilung der POF im Polymer verbessert wird, wenn man sie als Schmelzgranulat einsetzt. Die besser verteilten Partikel ergeben eine effektivere Flammschutzwirkung. Weitere Resultate der besseren Partikelverteilung ist eine bessere und ästhetischere Oberflächenbeschaffenheit und -güte. Außerdem können auch bessere mechanische Festigkeitseigenschaften resultieren.

Gegenstand der Erfindung ist daher eine granulare Flammschutzmittelzusammensetzung aus einer phosphororganischen Flammschutzkomponente und mindestens einem Binder.

Bevorzugt handelt es sich bei der phosphororganischen Flammschutzkomponente um ein Phosphinsäuresalz der Formel (I) und/oder ein Diphosphinsäuresalz der Formel (II) und/oder deren Polymere (Komponente A), 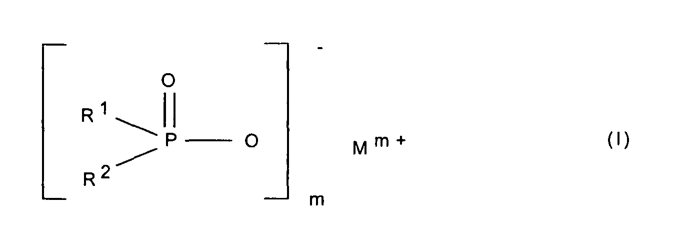 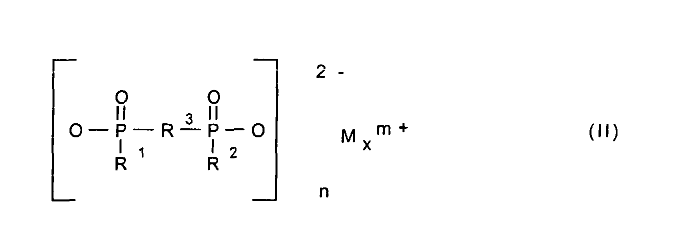 worin
- R¹, R²: gleich oder verschieden sind und C₁-C₆-Alkyl, linear oder verzweigt und/oder Aryl;
- R³: C₁-C₁₀-Alkylen, linear oder verzweigt, C₆-C₁₀-Arylen, -Alkylarylen oder - Arylalkylen;
- M: Mg, Ca, Al, Sb, Sn, Ge, Ti, Zn, Fe, Zr, Ce, Bi, Sr, Mn, Li, Na, K und/oder eine protonierte Stickstoffbase;
- m: 1 bis 4;
- n: 1 bis 4;
- x: 1 bis 4
bedeuten.

Bevorzugt bedeutet M Calcium, Aluminium oder Zink.

Unter protonierten Stickstoffbasen werden bevorzugt die protonierten Basen von Ammoniak, Melamin, Triethanolamin, insbesondere NH₄⁺, verstanden.

Bevorzugt sind R¹, R² *gleich oder verschieden und bedeuten* C₁-C₆-Alkyl, *linear* oder verzweigt und/oder Phenyl.

Besonders bevorzugt sind R¹, R² gleich oder verschieden und bedeuten Methyl, Ethyl, n-Propyl, iso-Propyl, n-Butyl, tert.-Butyl, n-Pentyl und/oder Phenyl.

Bevorzugt bedeutet R³ Methylen, Ethylen, n-Propylen, iso-Propylen, n-Butylen, tert.-Butylen, n-Pentylen, n-Octylen oder n-Dodecylen.

Bevorzugt bedeutet R³ auch Phenylen oder Naphthylen.

Bevorzugt bedeutet R³ auch Methyl-phenylen, Ethylphenylen, tert.-Butylphenylen, Methylnaphthylen, Ethylnaphthylen oder tert.-Butylnaphthylen.

Bevorzugt bedeutet R³ auch Phenylmethylen, Phenylethylen, Phenylpropylen oder Phenylbutylen.

Bevorzugt enthält die granulare Flammschutzmittelzusammensetzung und/oder die phosphororganische Flammschutzkomponente weiterhin Melaminphosphat, Dimelaminphosphat, Melaminpyrophosphat, Melaminpolyphosphate, Melampolyphosphate, Melempolyphosphate und/oder Melonpolyphosphate.

Bevorzugt enthält die granulare Flammschutzmittelzusammensetzung und/oder die phosphororganische Flammschutzkomponente weiterhin
Melaminkondensationsprodukte wie Melam, Melem und/oder Melon.

Geeignet sind Kondensationsprodukte des Melamins oder Umsetzungsprodukte des Melamins mit Phosphorsäure bzw. Umsetzungsprodukte von
Kondensationsprodukten des Melamins mit Phosphorsäure sowie Gemische der genannten Produkte. Kondensationsprodukte des Melamins sind z.B. Melem, Melam oder Melon bzw. höher kondensierte Verbindungen dieses Typs sowie Gemische derselben und können z.B. durch ein Verfahren hergestellt werden, wie es in der WO-A-96/16948 beschrieben ist.

Unter den Umsetzungsprodukten mit Phosphorsäure versteht man Verbindungen, die durch Umsetzung von Melamin oder den kondensierten Melaminverbindungen wie Melam, Melem oder Melon etc. mit Phosphorsäure entstehen. Beispiele hierfür sind Melaminpolyphosphat, Melampolyphosphat und Melempolyphosphat bzw. gemischte Polysalze, wie sie z.B. in der PCT/WO 98/39306 beschrieben sind. Die genannten Verbindungen sind bereits aus der Literatur bekannt und können auch durch andere Verfahren als die direkte Umsetzung mit Phosphorsäure hergestellt werden. Melaminpolyphosphat kann zum Beispiel analog PCT/WO 98/45364 hergestellt werden durch die Umsetzung von Polyphosphorsäure und Melamin bzw. analog PCT/WO 98/08898 durch die Kondensation von Melaminphosphat bzw. Melaminpyrophosphat.

Bevorzugt enthält die granulare Flammschutzmittelzusammensetzung und/oder die phosphororganische Flammschutzkomponente weiterhin oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melamincyanurat, Dicyandiamid und/oder Guanidin.

Bevorzugt enthält die granulare Flammschutzmittelzusammensetzung und/oder die phosphororganische Flammschutzkomponente stickstoffhaltige Phosphate der Formeln (NH₄)_{y} H_{3-y} PO₄ bzw. (NH₄ PO₃)_{z} mit y gleich 1 bis 3 und z gleich 1 bis 10.000.

Bevorzugt enthält die granulare Flammschutzmittelzusammensetzung und/oder die phosphororganische Flammschutzkomponente als Komponente B eine synthetische anorganische Verbindung und/oder ein mineralisches Produkt.

Bevorzugt handelt es sich bei der Komponente B um eine Sauerstoffverbindung des Siliciums, um Magnesiumverbindungen, um Metallcarbonate von Metallen der zweiten Hauptgruppe des Periodensystems, um roten Phosphor, um Zink- oder Aluminiumverbindungen.

Besonders bevorzugt handelt es sich bei den Sauerstoffverbindungen des Siliciums um Salze und Ester der Orthokieselsäure und deren Kondensationsprodukte, um Silikate, Zeolithe und Kieselsäuren, um Glas-, Glas-Keramik oder Keramik-Pulver; bei den Magnesiumverbindungen um Magnesiumhydroxid, Hydrotalcite, Magnesium-Carbonate oder Magnesium-Calcium-Carbonate; bei den Zinkverbindungen um Zinkoxid, -stannat, -hydroxystannat, -phosphat, -borat oder -sulfide; bei den Aluminiumverbindungen um Aluminiumhydroxid oder -phosphat.

Bevorzugt enthält die granulare Flammschutzmittelzusammensetzung und/oder die phosphororganische Flammschutzkomponente als weitere Komponente C Stickstoffverbindungen.
Bevorzugt handelt es sich bei den Stickstoffverbindungen um solche der Formeln (III) bis (VIII) oder Gemische davon 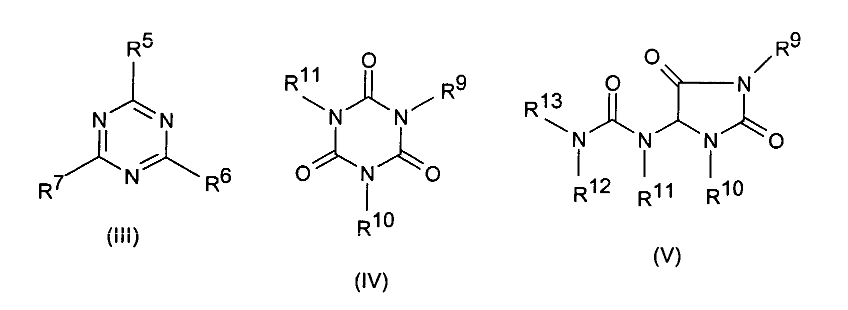 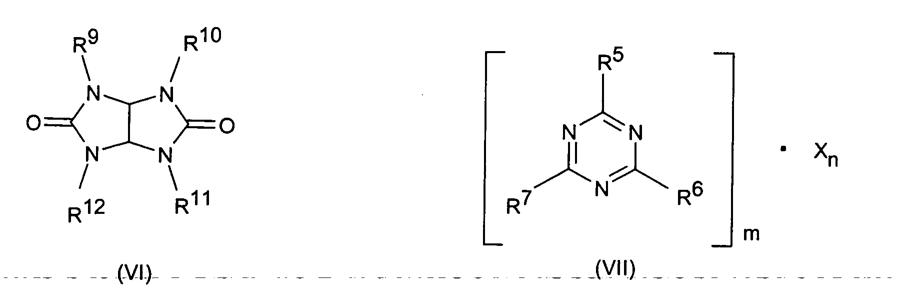 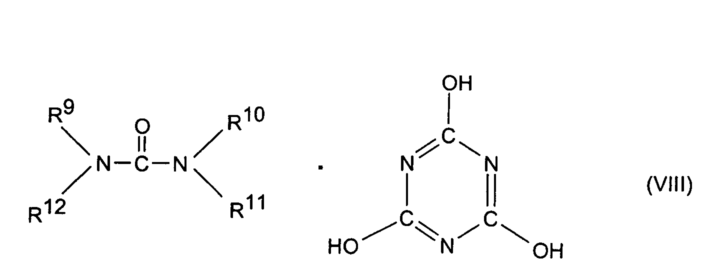 worin
- R⁵ bis R⁷: Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder - Arylalkyl, -OR⁸ und -N(R⁸)R⁹ , sowie N-alicyclisch oder N-aromatisch,
- R⁸: Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder - Arylalkyl,
- R⁹ bis R¹³: die gleichen Gruppen wie R⁸ sowie -O-R⁸,
- m und n: unabhängig voneinander 1, 2, 3 oder 4,
- X: Säuren, die Addukte mit Triazinverbindungen (III) bilden können,
bedeuten.

Bevorzugt enthält die granulare Flammschutzmittelzusammensetzung und/oder die phosphororganische Flammschutzkomponente auch Carbodiimide.

Erfindungsgemäß sind auch synergistische Kombinationen von den genannten Phosphinaten mit bestimmten stickstoffhaltigen Verbindungen, die in einer ganzen Reihe von Polymeren als Flammschutzmittel effektiver wirken, als die Phosphinate allein (DE 196 14 424 A1 sowie DE 197 34 437 A1 und DE-197 37 727 A1). Die Flammschutzwirkung der Phosphinate kann durch Kombination mit weiteren Flammschutzmitteln, vorzugsweise stickstoffhaltigen Synergisten oder Phosphor/Stickstoff Flammschutzmitteln verbessert werden.

Bevorzugte Binder sind Alkylalkoxylate, darunter werden bevorzugt ethoxylierte Alkohole, bevorzugt primäre Alkohole, mit bevorzugt 8 bis 22 C-Atomen und bevorzugt 1 bis 80 EO-Einheiten pro Mol Alkohol, eingesetzt, wobei der Alkoholrest linear oder bevorzugt in 2-Stellung methylverzweigt ist oder lineare und methylverzweigte Reste im Gemisch enthält, so wie dies üblicherweise in Oxoalkoholresten der Fall ist. Zu den bevorzugten ethoxylierten Alkoholen gehören beispielsweise C₁₁-Alkohole mit 3, 5, 7, 8 und 11 EO-Einheiten, (C₁₂-C₁₅)-Alkohole mit 3, 6, 7, 8, 10 und 13 EO-Einheiten, (C₁₄-C₁₅)-Alkohole mit 4, 7 und 8 EO-Einheiten, (C₁₆-C₁₈)-Alkohole mit 8, 11, 15, 20, 25, 50 und 80 EO-Einheiten und Mischungen derselben, wie z.B. die ®Genapol-Typen T80, T110, T150, T200, T250, T500, T800 der Fa. Clariant GmbH. Die angegebenen Ethoxylierungsgrade stellen statistische Mittelwerte dar, die für ein spezielles Produkt eine ganze oder eine gebrochene Zahl sein können. Zusätzlich zu diesen können auch Fettalkohol-EO/PO-Addukte eingesetzt werden.

Bevorzugt als Binder sind weiterhin Caprolactam und Triphenylphosphat.

Bevorzugt handelt es sich bei dem Binder um Ethylenglykol, Propylenglykol und/oder Butylenglykol; deren Oligomere und/oder Polymere und/oder deren Ether.
Bevorzugt handelt es sich bei dem Binder um natürliche, chemisch modifizierte und/oder synthetische Wachse; bevorzugt um Carnaubawachse und Montanwachse.

Wachse sind natürlich oder künstlich gewonnene Stoffe, die bei 20°C fest und knetbar und über 40°C ohne Zersetzung schmelzend und niedrigviskos sind. Wachse gehen in der Regel zwischen 50 und 90°C, in Ausnahmefällen auch bis zu etwa 200°C, in den schmelzflüssigen, niedrigviskosen Zustand über. Man unterscheidet natürliche Wachse wie Carnaubawachs, chemisch modifizierte Wachse wie Montanesterwachse und synthetische Wachse wie Polyethylenwachse.

Montanwachse für die Kunststoffverarbeitung die Gleitmittel und interne Trennmittel für die Verarbeitung von Polyvinylchlorid, Polyolefinen, Polyamind, Polystyrol, linearen Polyestern, thermoplastischem Polyurethan, härtbaren Formmassen und anderen Kunststoffen sind. Sie sind Folgeprodukte der Raffination von Rohmontanwachs, das durch Extraktion von Braunkohle gewonnen wird. Sie stellen langkettige Carbonsäuren der Kettenlängen C28-C32, deren Voll- und Teilester mit Ethylenglykol Gylcerin, Butylenglykol und Erdalkalisalze von teilhydrolysierten Estern dar, z.B. ® Licowax E, ® Licowax WE 4 und ® Licowax OP.

Polyethylenwachse sind für den Polymerbereich (PVC, Gummi, Polyolefine) geeignet. z.B. ® Licowax PE 520, ® Licowax PE 810, ® Licowax PE 820, ® Licowax PE 830, ®Licowax PE 840, ® Licomont CaV, ®Licolub WE4, ® Ceridust 5551.

Bevorzugt handelt es sich bei dem Binder um Kunstharze, besonders Phenolharze. Unter Kunstharze werden nach DIN 55958 synthetische Harze verstanden, die durch Polymerisations-, Polyadditions- oder Polykondensationsreaktion hergestellt werden. Bevorzugtes Phenolharz ist z.B. der Typ 28391 der Fa. Durez.

Geeignet als Binder sind weiterhin Polyethylenglycole H(OCH2CH2O)nOH mit Molekularmassen von 500 bis 40000 Besonders bevorzugt sind die Typen ®PEG 600, 800, 1000, 1500, 2000, 3000, 4000, 6000, 8000, 10000, 12000, 20000, 35000 der Fa. Clariant GmbH.

Geeignet als Binder sind auch Polyethylenglycolmonoalkylether, Polyethylenglycolmonoallylether, Polyethylenglycolmonovinylether.

Bevorzugte Binder sind Ester, Amide, Anhydride, Hydrate und Salze von gesättigten aliphatischen Mono-, Di-, Tri- und Polycarbonsäuren.

Bevorzugte Binder sind weiterhin C₁-C₂₀-(Alkyl-, Oxalkyl, Alkenyl-, Alkinyl-, Aralkyl-, Alkylaryl- oder Aryl-)Monocarbonsäureester, C₁-C₂₀-(Alkyl-, Oxalkyl, Alkenyl-, Alkinyl-, Aralkyl-, Alkylaryl- oder Aryl-) Dicarbonsäureester, C₁-C₂₀-(Alkyl-, Oxalkyl, Alkenyl-, Alkinyl-, Aralkyl-, Alkylaryl- oder Aryl-)Tri-carbonsäureester, C₁-C₂₀-(Alkyl-, Oxalkyl, Alkenyl-, Alkinyl-, Aralkyl-, Alkylaryl- oder Aryl-)Oligocarbonsäureester, C₁-C₂₀-(Alkyl-, Oxalkyl, Alkenyl-, Alkinyl-, Aralkyl-, Alkylaryl- oder Aryl-) Polycarbonsäureester.

Bevorzugte Binder sind weiterhin Dicarbonsäuremonoorganyl- oder -diorganylester; Tricarbonsäuremonoorganyl-, -diorganylester oder -triorganylester; Oligocarbonsäuremonoorganyl-, -diorganylester, -triorganylester oder - oligoorganylester; Polycarbonsäuremonoorganyl-, -diorganylester, -triorganylester, - oligoorganylester oder -polyorganylester oder Mischungen davon.

Bevorzugte Binder sind weiterhin Phthalsäureester, darunter Phthalsäuremonoorganylester oder Phthalsäurebisorganylester (Organyl = z.B. Alkyl, Oxalkyl, Alkenyl, Alkinyl, Aralkyl, Alkylaryl oder Aryl, bevorzugt Phthalsäuremonoalkylester, Phthalsäuredialkylester (Alkyl = lineares, verzweigtes, cyclisches, substituiertes cyclisches, heterocyclisches C₁-C₂₀), z.B. Dimethylphthalat, Diethylphthalat, Dipropylphthalat, Diisopropylphthalat, Dibutylphthalat, epoxidiertes Di(2-ethylhexyl)phthalat, Diisooctylphthalat, Dioctylphthalat, Diisononylphthalat, n-Octylphthalat, n-Decylphthalat, Diisodecylphthalat, Butylbenzylphthalat, Butylcyclohexylphthalat, Dicaprylphthalat, Di(3,5,5-trimethylhexyl)phthalat, Di(1-allyl-2,2,6,6-tetramethylpiperidin-4-yl) phthalat.

Bevorzugte Binder sind weiterhin Isophthalsäureester, darunter Isophthalsäuremonoorganylester oder Isophthalsäurebisorganylester (Organyl = z.B. Alkyl, Oxalkyl, Alkenyl, Alkinyl, Aralkyl, Alkylaryl oder Aryl, bevorzugt Isophthalsäuremonoalkylester, lsophthalsäuredialkylester (Alkyl = lineares, verzweigtes, cyclisches, substituiertes cyclisches, heterocyclisches C₁-C₂₀), z.B. Di(2-ethylhexyl)isophthalat.

Bevorzugte Binder sind weiterhin Terephthalsäureester, darunter Terephthalsäuremonoorganylester oder Terephthalsäurebisorganylester (Organyl = z.B. Alkyl, Oxalkyl, Alkenyl, Alkinyl, Aralkyl, Alkylaryl oder Aryl, bevorzugt Terephthalsäuremonoalkylester, Terephthalsäuredialkylester (Alkyl = lineares, verzweigtes, cyclisches, substituiertes cyclisches, heterocyclisches C₁-C₂₀).

Bevorzugte Binder sind weiterhin Oxalsäureester, Malonsäureester (z.B. Di(2,2,6,6-tetramethylpiperidin-4-yl) diethylmalonat, Di(1,2,2,6,6-pentamethylpiperidin-4-yl) dibutylmalonat, Di(1,2,2,6,6-pentamethylpiperidin-4-yl) butyl(3,5-di-tert-butyl-4-hydroxybenzyl) malonat), Bernsteinsäureester (z.B. Di(2,2,6,6-tetramethylpiperidin-4-yl) succinat), Glutarsäureester (z.B. Di(2,2,6,6-tetramethylpiperidin-4-yl) glutarat).

Bevorzugte Binder sind weiterhin Adipinsäureester, darunter Adipinsäuremonoorganylester oder Adipinsäurebisorganylester (Organyl = z.B. Alkyl, Oxalkyl, Alkenyl, Alkinyl, Aralkyl, Alkylaryl oder Aryl, bevorzugt Adipinsäuremonoalkylester, Adipinsäuredialkylester (Alkyl = lineares, verzweigtes, cyclisches, substituiertes cyclisches, heterocyclisches C₁-C₂₀), z.B. Dimethyladipat, Diethyladipat, Di-n-propyladipat, Di-iso-propyladipat, Di-n-butyladipat, Di-iso-butyladipat, Di-tert-butyladipat, Di(n-Octyl)adipat, Di(2-ethylhexyl)adipat, Diisodecyladipat, n-Octyladipat, 2-ethylhexyladipat, n-Decyladipat, isodecyladipat, Di(2,2,6,6-tetramethylpiperidin-4-yl) adipat.

Bevorzugte Binder sind weiterhin Pimelinsäureester, Suberinsäure, Azelainsäureester (z.B. Dialkylazelat, besonders Di(2-ethylhexyl)azelat, Ester der 1,13-Tridecandicarbonsäure (Brassylic acid).

Bevorzugte Binder sind weiterhin Sebacinsäureester, darunter Sebacinsäuremonoorganylester oder Sebacinsäurebisorganylester (Organyl = z.B. Alkyl, Oxalkyl, Alkenyl, Alkinyl, Aralkyl, Alkylaryl oder Aryl, bevorzugt Sebacinsäuremonoalkylester, Sebacinsäuredialkylester (Alkyl = lineares, verzweigtes, cyclisches, substituiertes cyclisches, heterocyclisches C₁-C₂₀), z.B. Dialkylsebacat, besonders Di(2-ethylhexyl)sebacat, Di(2,2,6,6-tetramethylpiperidin-4-yl) sebacat, Di(1,2,2,6,6-pentamethylpiperidin-4-yl) sebacat, Di(1,2,3,6-tetramethyl-2,6-diethyl-piperidin-4-yl) sebacat, Di(1-octyloxy-2,2,6,6-tetramethylpiperidin-4-yl) sebacat, Di(1-cyclohexyloxy-2,2,6,6-tetramethylpiperidin-4-yl) sebacat.

Bevorzugte Binder sind weiterhin Tetrahydrophtalsäureester, darunter Tetrahydrophtalsäuremonoorganylester oder Tetrahydrophtalsäurebisorganylester (Organyl = z.B. Alkyl, Oxalkyl, Alkenyl, Alkinyl, Aralkyl, Alkylaryl oder Aryl, bevorzugt Tetrahydrophtalsäuremonoalkylester, Tetrahydrophtalsäuredialkylester (Alkyl = lineares, verzweigtes, cyclisches, substituiertes cyclisches, heterocyclisches C₁-C₂₀), z.B. Di(2-ethylhexyl)tetrahydrophthalat.

Bevorzugte Binder sind weiterhin Tetrahydroisophthalsäureester, darunter Tetrahydroisophthalsäuremonoorganylester oder Tetrahydroisophthalsäurebisorganylester (Organyl = z.B. Alkyl, Oxalkyl, Alkenyl, Alkinyl, Aralkyl, Alkylaryl oder Aryl, bevorzugt Tetrahydroisophthalsäuremonoalkylester, Tetrahydroisophthalsäuredialkylester (Alkyl = lineares, verzweigtes, cyclisches, substituiertes cyclisches, heterocyclisches C₁-C₂₀).

Bevorzugte Binder sind weiterhin Tetrahydroterephthalsäureester, darunter Tetrahydroterephthalsäuremonoorganylester oder Tetrahydroterephthalsäurebisorganylester (Organyl = z.B. Alkyl, Oxalkyl, Alkenyl, Alkinyl, Aralkyl, Alkylaryl oder Aryl, bevorzugt Tetrahydroterephthalsäuremonoalkylester, Tetrahydroterephthalsäuredialkylester (Alkyl = lineares, verzweigtes, cyclisches, substituiertes cyclisches, heterocyclisches C₁-C₂₀).

Bevorzugte Binder sind weiterhin Hexahydrophtalsäureester, darunter Hexahydrophtalsäuremonoorganylester oder Hexahydrophtalsäurebisorganylester (Organyl = z.B. Alkyl, Oxalkyl, Alkenyl, Alkinyl, Aralkyl, Alkylaryl oder Aryl, bevorzugt Hexahydrophtalsäuremonoalkylester, Hexahydrophtalsäuredialkylester (Alkyl = lineares, verzweigtes, cyclisches, substituiertes cyclisches, heterocyclisches C₁-C₂₀), z.B. Di(2-ethylhexyl)hexahydrophthalat.

Bevorzugte Binder sind weiterhin Hexahydroisophthalsäureester, darunter Hexahydroisophthalsäuremonoorganylester oder Hexahydroisophthalsäurebisorganylester (Organyl = z.B. Alkyl, Oxalkyl, Alkenyl, Alkinyl, Aralkyl, Alkylaryl oder Aryl, bevorzugt Hexahydroisophthalsäuremonoalkylester, Hexahydroisophthalsäuredialkylester (Alkyl = lineares, verzweigtes, cyclisches, substituiertes cyclisches, heterocyclisches C₁-C₂₀).

Bevorzugte Binder sind weiterhin Hexahydroterephthalsäureester, darunter Hexahydroterephthalsäuremonoorganylester oder Hexahydroterephthalsäurebisorganylester (Organyl = z.B. Alkyl, Oxalkyl, Alkenyl, Alkinyl, Aralkyl, Alkylaryl oder Aryl, bevorzugt Hexahydroterephthalsäuremonoalkylester, Hexahydroterephthalsäuredialkylester (Alkyl = lineares, verzweigtes, cyclisches, substituiertes cyclisches, heterocyclisches C₁-C₂₀).

Bevorzugte Binder sind weiterhin Maleinsäureester, darunter Maleinsäuremonoorganylester oder Maleinsäurebisorganylester (Organyl = z.B. Alkyl, Oxalkyl, Alkenyl, Alkinyl, Aralkyl, Alkylaryl oder Aryl, bevorzugt Maleinsäuremonoalkylester, Maleinsäuredialkylester (Alkyl = lineares, verzweigtes, cyclisches, substituiertes cyclisches, heterocyclisches C₁-C₂₀), z.B. Di(1-benzyl-2,2,6,6-tetramethylpiperidin-4-yl) maleat.

Bevorzugte Binder sind weiterhin Ester von Hydroxycarbonsäuren, Hydroxydicarbonsäuren, Hydroxytricarbonsäuren, Hydroxyoligocarbonsäuren und/oder Hydroxypolycarbonsäuren, z.B. Tartronsäure, Äpfelsäure, Weinsäure, Citronensäure etc.

Bevorzugte Binder sind weiterhin Citronensäuresäureester, darunter Citronensäuresäuremonoorganylester oder Citronensäuresäurebisorganylester (Organyl = z.B. Alkyl, Oxalkyl, Alkenyl, Alkinyl, Aralkyl, Alkylaryl oder Aryl, bevorzugt Citronensäuresäuremonoalkylester, Citronensäuresäuredialkylester (Alkyl = lineares, verzweigtes, cyclisches, substituiertes cyclisches, heterocyclisches C₁-C₂₀).

Bevorzugte Binder sind weiterhin Butylepoxystearat, Hexylepoxystearat, epoxidiertes Sojaöl, epoxidiertes Octyltallat, epoxidiertes Octyloleat, Tetraethyleneglycol/di(2-ethylhexoat), und Triethylenglycol/di(2-ethylhexoat).

Bevorzugte Binder sind weiterhin Ester von ein-, zwei-, drei-, vier-, fünfwertigen Alkoholen und höheren Polyolen.

Bevorzugte Binder sind Mono-, Di-, Tri- oder Tetraorganylester von Pentaerythrit oder Mischungen davon, z.B. Pentaerythrittetrabenzoat.

Bevorzugte Binder Sulfonamidbasierende Verbindungen, besonders bevorzugt Aromatische Sulfonamide z.B. N-Ethyltoluolsulfonamid, N-Cyclohexyltoluolsulfonamid, N-Butylbenzolsulfonamid, N-Methylbenzolsulfonamid, N-Butylbenzolsulfonamid, p-Toluolsulfonamid, N-Ethyl-p-toluolsulfonamid und N-Cyclohexylp-toluol sulfonamid.

Bevorzugte Binder sind Glycerin, Hexylglycol, modifiziertes Urethane Prepolymer das im Gewichtsdruchschnitt ein Molekulargewicht von 400 bis 2000, bevorzugt 600 bis 1000 besitzt.

Bevorzugte Binder sind p-Hydroxybenzoesäureester z.B. Hexyloxyethoxyethyl p-hydroxybenzoat, Hexyloxypropoxypropyl p-hydroxybenzoat, Hexyloxybutoxybutyl p-hydroxybenzoat, Octyloxyethoxyethyl p-hydroxybenzoat, Octyloxypropoxypropyl p-hydroxybenzoat, Octyloxybutoxybutyl p-hydroxybenzoat, 2'-Ethylhexyloxyethoxyethyl p-hydroxybenzoat, 2'-Ethylhexyloxypropoxypropyl, p-hydroxybenzoat, 2'-Ethylhexyloxybutoxybutyl p-hydroxybenzoat, Decyloxyethoxyethyl p-hydroxybenzoat, Decyloxypropoxypropyl p-hydroxybenzoat, Decyloxybutoxybutyl p-hydroxybenzoat,

Bevorzugte Binder sind p-Hydroxybenzoesäurealkylester z.B. Octyl p-hydroxybenzoat, 2-ethylhexyl p-hydroxybenzoat, heptyl p-hydroxybenzoat, 2-ethyldecyl p-hydroxybenzoat, 2-octyloctyl p-hydroxybenzoat und 2-decyldodecyl, p-hydroxybenzoat.

Bevorzugte Binder sind Phenole such as beta-Naphthol, Dibenzylphenol and Octylcresol.

Als Phosphorverbindungen der Oxidationsstufe +5 kommen vor allem alkyl- und arylsubstituierte Phosphate in Betracht. Beispiele sind Phenylbisdodecylphosphat, Phenylethylhydrogenphosphat, Phenyl-bis(3,5,5-trimethylhexyl)phosphat, Ethyldiphenylphosphat, 2-Ethylhexyldi(tolyl)phosphat, Diphenylhydrogen-phosphat, Bis(2-ethylhexyl)-p-tolylphosphat, Tritolylphosphat, Bis(2-ethylhexyl)-phenylphosphat, Di(nonyl)phenylphosphat, Phenylmethylhydrogenphosphat, Di(dodecyl)-p-tolylphosphat, p-Tolylbis(2,5,5-trimethylhexyl)phosphat oder 2-Ethylhexyldiphenylphosphat. Ganz besonders geeignet ist Triphenylphosphat und Resorcinol-bis-(diphenylphosphat) (RDP) und dessen kernsubstituierten Derivate.

Bevorzugte Binder sind weiterhin Tri(butoxyethyl)phosphat, Trioctylphosphat, Trikresylphosphat, 2-Ethylhexyldiphenylphosphat, Cresyldiphenylphosphat.

Bevorzugte Binder sind organische Salze von mehrwertigen Metallen, besonders bevorzugt organische Salze von Elementen der zweiten, dritten und vierten Hauptgruppe und der zweiten Nebengruppe besonders der Elemente Magnesium, Calcium, Strontium, Barium, Zink, Cadmium, Aluminium, Zinn, Blei. Besonders bevorzugt sind Carbonsäuren mit mindestens 12 Kohlenstoffatome Dodecansäure (Laurinsäure), Cocossäure, Tetradecansäure (Myristinsäure), Hexadecansäure (Palmitinsäure, Cetylsäure), Octadecansäure (Stearinsäure), Octadecensäure, cis-9-(Ölsäure, Elainsäure), Octadecensäure, trans-9- (Elaidinsäure), Eicosansäure (Arachidinsäure), Docosansäure (Behensäure).

Die mittlere Teilchengröße der phosphororganischen Flammschutzmittelkomponente beträgt 0,1 bis 1000 µm, bevorzugt 1 bis 100 µm.

Die mittlere Teilchengröße der granularen Flammschutzmittelzusammensetzung beträgt 100 bis 10.000 µm, bevorzugt 200 bis 2000 µm.

Die bevorzugte Schüttdichte der phosphororganischen
Flammschutzmittelkomponente beträgt 80 bis 800 g/l, besonders bevorzugt 200 bis 800 g/l.

Die bevorzugte Schüttdichte der granularen Flammschutzmittelzusammensetzung beträgt 200 bis 1500 g/l, besonders bevorzugt 300 bis 700 g/l.

Das bevorzugte Mengen-Verhältnis von Binder zu phosphororganischen Komponente ist 1 zu 99 bis 1 zu 0,11, bevorzugt 1 zu 49 bis1 zu 0,25, besonders bevorzugt 1 zu 19 bis1 zu 1.

Bevorzugte beträgt der Schmelz-/Tropfpunkt des Binders 50 bis 200°C.

Das bevorzugte Verfahren zur Herstellung der erfindungsgemäßen granularen Flammschutzmittelzusammensetzung ist die Schmelzagglomeration. Dabei wird ein Binder durch äußere Wärmeeinwirkung und durch mittels Scherkräfte erzeugte Wärmeentwicklung partiell zum Schmelzen gebracht. In Zusammenwirkung mit den einwirkenden Scherkräften bewirkt dies eine Vergrößerung der Feststoffpartikel. In den sich bildenden Agglomeraten werden die Feststoffpartikel durch sich ausbildende Binderbrücken zusammengehalten.

Die erfindungsgemäße granulare Flammschutzmittelzusammensetzung kann in einer Ausführungsform hergestellt werden, indem der Binder in flüssiger Form in einem geeigneten Mischer zu der bewegten phosphororganischen Flammschutzmittelkomponente gegeben und 0,01 bis 1 Stunden bei 50 bis 300°C gemischt wird.

Die erfindungsgemäße granulare Flammschutzmittelzusammensetzung kann in einer Ausführungsform hergestellt werden, indem das feste Bindemittel in einem geeigneten Mischer zu der bewegten phosphororganischen Flammschutzmittelkomponente gegeben, 0,01 bis 1 Stunden bei 50 bis 300°C gemischt und vorher/währenddessen/nachher bis zum Schmelzpunkt des Binders erhitzt wird.

Geeignete Mischer können sein: Pflugscharmischertypen der Fa. Lödige, Ringspaltmischertypen der Fa. Lödige, (z.B. Typ CB30), Flexomix-Mischertypen der Fa. Schugi, Ringspaltmischer Typ HEC der Fa. Niro, Ringschichtmischer (z.B. Typ K-TTE4) der Fa. Drais/Mannheim, Eirich-Mischer (z.B. Typ R02), Telschig-Mischer (Typ WPA6), Haut-Mischer (die beiden letzten arbeiten nach dem Freifallprinzip) Zig-Zag-Mischer der Fa. Niro und Mischer der Fa. Nauta, in denen das Mischgut nach dem Archimedes-Prinzip durch eine Schnecke umwälzt wird.

Die zunächst entstehende Produktmischung kann in einem geeigneten Trockner getrocknet beziehungsweise zum weiteren Kornaufbau getempert werden. Erfindungsgemäße Trockner können sein: Fließbetttrockner der Fa. Hosokawa Schugi (Typen: Schugi Fluid-Bed, Vometec Fließbett-Trockner), Wirbelbetttrockner der Fa. Waldner bzw. der Fa. Glatt, Turbo-Flugschichttrockner der Fa. Waldner, Spin-flash-Trockner der Fa. Anhydro sowie Trommeltrockner.

Bevorzugte Betriebsbedingungen im Fließbetttrockner sind: Lufteintrittstemperatur 120 bis 280°C, Produkttemperatur 20 bis 200°C.

Die erfindungsgemäße granulare Flammschutzmittelzusammensetzung kann in einer Ausführungsform hergestellt werden, indem die phosphororganische Flammschutzmittelkomponente mit einem Bindemittel aufgeschmolzen und in Tropfenform erstarrt wird. Das Aufschmelzen kann in einem Kneter, gerührten Kessel oder ähnlichen Aggregaten erfolgen. Bevorzugt lässt man die Schmelze in einem Wirbelbett, auf einem Pelletierteller, oder auf einem Metallband erstarren.

Die verbleibende Feuchte der erfindungsgemäßen granularen Flammschutzmittelzusammensetzung beträgt 0,01 bis 10 %, bevorzugt 0,05 bis 1 %.

Die Erfindung betrifft auch eine flammgeschützte Polymerformmasse, die die erfindungsgemäße granulare Flammschutzmittelzusammensetzung enthält.

Bevorzugt enthält die flammgeschützte Polymerformmasse
1 bis 50 Gew.-% granulare Flammschutzmittelzusammensetzung,
1 bis 99 Gew.-% thermoplastisches Polymer oder Mischungen derselben
0 bis 60 Gew.-% Additive
0 bis 60 Gew.-% Füllstoff.

Besonders bevorzugt enthält die flammgeschützte Polymerformmasse
5 bis 30 Gew.-% granulare Flammschutzmittelzusammensetzung,
5 bis 90 Gew.-% thermoplastisches Polymer oder Mischungen derselben
5 bis 40 Gew.-% Additive
5 bis 40 Gew.-% Füllstoff.

Bevorzugt enthält die flammgeschützte Polymerformmasse weiterhin Komponenten B und/oder C, wie zuvor beschrieben.

Bevorzugt handelt es sich bei den thermoplastischen Polymeren um Polystyrol-Hl (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol).

Besonders bevorzugt handelt es sich bei den thermoplastischen Polymeren um Polyamid, Polyester oder ABS.

Die Erfindung betrifft schließlich auch Polymer-Formkörper, -Filme, -Fäden und - Fasern, enthaltend die erfindungsgemäße granulare Flammschutzmittelzusammensetzung.

Bei dem Polymer der Polymer-Formkörper, -Filme, -Fäden und -Fasern handelt es sich um ein thermoplastisches oder duroplastisches Polymer.

Bevorzugt handelt es sich den thermoplastischen Polymeren um Polystyrol-Hl (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol), Polyamid, Polyester und/oder ABS.

Bevorzugte thermoplastische Polymere sind Polyethylen (PE), Polypropylen (PP), Polystyrol (PS), Polyvinylchlorid (PVC), Polyacrylnitril (PAN) und Polyacrylate.

Bevorzugt handelt es sich bei den duroplastischen Polymeren um Formaldehyd-, Epoxid-, Melamin- Phenolharz-Polymere und/oder Polyurethane.

Bevorzugt enthalten die Polymer-Formkörper, -Filme, -Fäden und -Fasern
1 bis 50 Gew.-% granulare Flammschutzmittelzusammensetzung,
1 bis 99 Gew.-% Polymer oder Mischungen derselben
0 bis 60 Gew.-% Additive
0 bis 60 Gew.-% Füllstoff.

Besonders bevorzugt enthalten die Polymer-Formkörper, -Filme, -Fäden und - Fasern
5 bis 30 Gew.-% granulare Flammschutzmittelzusammensetzung,
5 bis 90 Gew.-% Polymer oder Mischungen derselben
5 bis 40 Gew.-% Additive
5 bis 40 Gew.-% Füllstoff.

Die erfindungsgemäße granulare Flammschutzmittelzusammensetzung wird bevorzugt in Compounds angewendet, die weiter zur Erzeugung von Polymer-Formkörpern verwendet werden.

Erfindungsgemäß sind auch Polymer-Formkörper, die die erfindungsgemäßen granularen Flammschutzmittelzusammensetzung enthalten.

Die flammhemmenden Komponenten können in thermoplastische Polymere eingearbeitet werden, indem z.B. alle Bestandteile als Pulver und/oder Granulat in einem Mischer vorgemischt und anschließend in einem Compoundieraggregat (z.B. einem Doppelschneckenextruder) in der Polymerschmelze homogenisiert werden. Die Schmelze wird üblicherweise als Strang abgezogen, gekühlt und granuliert. Die Komponenten können auch separat über eine Dosieranlage direkt in das Compoundieraggregat eingebracht werden.

Es ist ebenso möglich, die flammhemmenden Zusätze einem fertigen Polymergranulat bzw. -pulver beizumischen und die Mischung direkt auf einer Spritzgussmaschine zu Formteilen zu verarbeiten.

Bevorzugte Füllstoffe sind Glas (bevorzugt in Kugel oder in Faserform), Oxide und/oder Hydroxide der Elemente der zweiten und dritten Hauptgruppe des Periodensystems der Elemente (bevorzugt Aluminium und Magnesium), Schichtsilicate und Tonminerale z.B. Bentonite, Montmorillonite, Hectorite, Saponite, gefällte/pyrogene/kristalline/amorphe Kieselsäuren, Kreide.

Bevorzugte Additive sind Synergisten, Antioxidantien, Lichtschutzmittel, Gleitmittel, Farbmittel, Nukleierungsmittel oder Antistatika sein. Beispiele für die verwendbaren Zusätze sind in EP 0 584 567 A1 angegeben.

Die Erfindung betrifft auch eine Intumeszenz-Flammschutz-Beschichtung enthaltend mindestens
1 bis 50 % granulare Flammschutzmittelzusammensetzung
0 bis 60 % Ammoniumpolyphosphat

### Experimentelles

### Bestimmung der Kornverteilung der erfindungsgemäßen granularen Flammschutzmittelzusammensetzung durch Siebanalyse:

In eine Siebmaschine der Fa. Retsch werden die Einsätze mit gewünschten Sieben eingesetzt. Dabei nimmt die Maschenweite der Siebe von oben nach unten ab. 50 g des zu untersuchenden Pulvers werden auf das weiteste Sieb aufgegeben. Durch die Schwingbewegung der Siebmaschine wird das Pulvermaterial durch die verschiedenen Siebe befördert. Die Rückstände auf den Sieben werden ausgewogen und rechnerisch auf die Materialeinwaage bezogen. Aus den Werten kann der d₅₀-Wert berechnet werden.

### Bestimmung der Kornverteilung mit dem Microtrac Granulometer

Die Teilchengröße in wässriger Dispersion wird mit Hilfe eines Granulometer Microtrac ASVR/FRA der Fa. Leeds u. Northrup bestimmt. Gemessen wird die Reflexion bzw. Beugung eines Laserstrahls beim Durchdringen der Dispersion. Hierfür werden 400 ml Ethanol durch die Lasermesszelle gepumpt. Automatisch wird die Festkörperprobe (z.B. 70 mg) zudosiert und nach 10 min die Teilchengrößenverteilung bestimmt. Die Auswertungseinheit des Gerätes berechnet den d₅₀- und den d₉₀-Wert.

### Herstellung, Verarbeitung und Prüfung von flammhemmenden Compounds und Kunststoff-Formkörper

Die Flammschutzmittelkomponenten werden mit dem Polymergranulat und evtl. Additiven vermischt und auf einem Doppelschnecken-Extruder (Typ Leistritz LSM 30/34) bei Temperaturen von 230 bis 260°C (PBT-GV) bzw. von 260 bis 280°C (PA 66-GV) eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Aarburg Allrounder) bei Massetemperaturen von 240 bis 270°C (PBT-GV) bzw. von 260 bis 290°C (PA 66-GV) zu Prüfkörpern verarbeitet und anhand des UL 94-Tests (Underwriter Laboratories) auf Flammwidrigkeit geprüft und klassifiziert.

### Beispiel 1 (erfindungsgemäß)

In einem Labormischer der Fa. Eirich werden 1276 g Diethylphosphinsäure-Aluminiumsalz (mittlerer Teilchendurchmesser d₅₀ = 3 µm) mit 224 g ® Licowax E vermischt und erhitzt. Es wird solange gemischt, bis der Granulierprozess einsetzt. Das Rohmaterial wird abgekühlt und gesiebt. Es werden 58,4 Gew.-% Schmelzgranulat-Gutkorn (zwischen 400 und 1400 µm) erhalten.

### Beispiel 2 (erfindungsgemäß)

In einem Labormischer der Fa. Eirich werden 1394 g Diethylphosphinsäure-Aluminiumsalz mit 106 g ® Licowax E vermischt und erhitzt. Es wird solange gemischt, bis der Granulierprozess einsetzt. Das Rohmaterial wird abgekühlt und gesiebt. Es werden 36,7 Gew.-% Schmelzgranulat-Gutkorn (zwischen 400 und 1400 µm) erhalten.

### Beispiel 3 (erfindungsgemäß)

In einem Labormischer der Fa. Eirich werden 1470 g Diethylphosphinsäure-Aluminiumsalz mit 30 g ® Licowax E vermischt und erhitzt. Es wird solange gemischt, bis der Granulierprozess einsetzt. Das Rohmaterial wird abgekühlt und gesiebt. Es werden 13 Gew.-% Schmelzgranulat-Gutkorn (zwischen 400 und 1400 µm) erhalten.

### Beispiel 4 (erfindungsgemäß)

In einem Labormischer der Fa. Eirich werden 1395 g Diethylphosphinsäure-Aluminiumsalz (mittlerer Teilchendurchmesser d₅₀ = 56 µm) mit 105 g ® Licowax PE 520 vermischt und erhitzt. Es wird solange gemischt, bis der Granulierprozess einsetzt. Das Rohmaterial wird abgekühlt und gesiebt. Es werden 36,6 Gew.-% Schmelzgranulat-Gutkorn (zwischen 400 und 1400 µm) erhalten.

### Beispiel 5 (erfindungsgemäß)

In einem Labormischer der Fa. Eirich werden 1395 g Diethylphosphinsäure-Aluminiumsalz mit 105 g ® Licolub WE4Fl vermischt und erhitzt. Es wird solange gemischt, bis der Granulierprozess einsetzt. Das Rohmaterial wird abgekühlt und gesiebt. Es werden 38,8 Gew.-% Schmelzgranulat-Gutkorn (zwischen 400 und 1400 µm) erhalten.

### Beispiel 6 (erfindungsgemäß)

In einem Labormischer der Fa. Eirich werden 1425 g Diethylphosphinsäure-Aluminiumsalz mit 75 g ® Genapol T500 vermischt und erhitzt. Es wird solange gemischt, bis der Granulierprozess einsetzt. Das Rohmaterial wird abgekühlt und gesiebt. Es werden 23 Gew.-% Schmelzgranulat-Gutkorn (zwischen 400 und 1400 µm) erhalten.

### Beispiel 7 (erfindungsgemäß)

In einem Labormischer der Fa. Eirich werden 1425 g Diethylphosphinsäure-Aluminiumsalz mit 75 g ® PEG 6000 vermischt und erhitzt. Es wird solange gemischt, bis der Granulierprozess einsetzt. Das Rohmaterial wird abgekühlt und gesiebt. Es werden 32,1 Gew.-% Schmelzgranulat-Gutkorn (zwischen 400 und 1400 µm) erhalten.

### Beispiel 8 (erfindungsgemäß)

In einem Hobart-Mischer werden 1500 g Melaminpolyphosphat Melapur® MP (Melaminphosphat), Fa. DSM Melapur, NL mit 1500 g Diethylphosphinsäure-Aluminiumsalz 5 min vermischt.

### Beispiel 9 (erfindungsgemäß)

In einem Labormischer der Fa. Eirich werden 1425 g phosphororganischer Flammschutzkomponente aus Beispiel 8 mit 75 g ® Licowax E vermischt und erhitzt. Es wird solange gemischt, bis der Granulierprozess einsetzt. Das Rohmaterial wird abgekühlt und gesiebt. Es werden 29,8 Gew.-% Schmelzgranulat-Gutkorn (zwischen 400 und 1400 µm) erhalten.

### Beispiel 10 (erfindungsgemäß)

In einem Laborkneter werden 750 g Diethylphosphinsäure-Aluminiumsalz mit 750 g Durez Harz Typ 28391 vermischt und geschmolzen. Die geschmolzene Masse wird auf ein Metallband getropft und erstarrt. Es werden flache, tropfenförmige Pellets mit einem Durchmesser von ca. 6 mm erhalten.

### Beispiel 11 (Vergleich)

Gemäß der allgemeinen Vorschrift wird eine Mischung von 57,5 Gew.-% Polyamid 6.6 (®Ultramid A3), 30 Gew.-% Glasfasern (®Vetrotex EC 10 4,5 mm 98 A), 12,5 Gew.-% Diethylphosphinsäure-Aluminiumsalz zu Prüfkörpern gegossen. Beim visuellen Abmustern sind an der Prüfkörper-Oberfläche weiße Inhomogenitäten zu erkennen. Im UL94-Brandtest wird eine V-1-Klassifizierung verfehlt.

### Beispiel 12 (erfindungsgemäß)

Gemäß der allgemeinen Vorschrift wird eine Mischung von 57,5 Gew.-% Polyamid 6.6 (®Ultramid A3), 30 Gew.-% Glasfasern (®Vetrotex EC 10 4,5mm 98 A), 12,5 Gew.-% granulare Flammschutzmittelzusammensetzung aus Beispiel 1 zu Prüfkörpern gegossen. Beim visuellen Abmustern ist die Prüfkörper-Oberfläche frei von Inhomogenitäten. Im UL94-Brandtest wird die V-0-Klassifizierung erzielt.

### Beispiel 13 (erfindungsgemäß)

Gemäß der allgemeinen Vorschrift wird eine Mischung von 57,5 Gew.-% Polyamid 6.6 (®Ultramid A3), 30 Gew.-% Glasfasern (®Vetrotex EC 10 4,5 mm 98 A), 12,5 Gew.-% granulare Flammschutzmittelzusammensetzung aus Beispiel 4 zu Prüfkörpern gegossen. Beim visuellen Abmustern ist die Prüfkörper-Oberfläche frei von Inhomogenitäten. Im UL94-Brandtest wird die V-0-Klassifizierung erzielt.

### Beispiel 14 (erfindungsgemäß)

20 Teile des Flammschutzmittels aus Beispiel 1 werden mit 50 Teilen Polybutylenterephthalat-Granulat, 30 Teilen Glasfasern vermischt und auf einem Doppelschnecken-Extruder (Typ Leistritz LSM 30/34) bei Temperaturen von 230 bis 260°C (PBT-GV) eingearbeitet. Der homogenisierte Polymerstrang wird abgezogen, im Wasserbad gekühlt und anschließend granuliert. Nach ausreichender Trocknung wurden die Granulate auf einer Spritzgießmaschine (Typ Aarburg Allrounder) bei Massetemperaturen von 240 bis 270°C (PBT-GV) zu Formkörpern verarbeitet. Im UL94-Brandtest wird die V-0-Klassifizierung erzielt.

**Tabelle 1:**

| Eigenschaften der granularen Flammschutzmittelzusammensetzungen | | | | | | | | |
|---|---|---|---|---|---|---|---|---|
| Beispiel | *POF Menge Einwaage | Binder | | | Produkt | | | |
| | g | Typ | Menge Einwaage g | Menge Einwaage % | Unterkorn <400µ % | Gutkorn % | Überkorn > 1400µ % | Schüttdichte g/l |
| Edukt Bsp 1 | - | - | - | - | - | - | - | 160 |
| 1 | 1276 | Licowax E | 224 | 15 | 9,7 | 58,4 | 31,9 | 857 |
| 2 | 1394 | Licowax E | 106 | 7 | 21,2 | 36,7 | 42,1 | 488 |
| 3 | 1470 | Licowax E | 30 | 2 | 82,5 | 13 | 4,5 | 305 |
| 4 | 1395 | Licowax PE 520 | 105 | 7 | 56,3 | 36,6 | 7,1 | 661 |
| 5 | 1395 | Licolub WE4Fl | 105 | 7 | 27,9 | 38,8 | 33,3 | 646 |
| 6 | 1425 | Genapol T500 | 75 | 5 | 27 | 23 | 50 | 589 |
| 7 | 1425 | PEG 6000 | 75 | 5 | 25,6 | 32,1 | 42,3 | 570 |
| 9 | 1425 | Licowax E | 75 | 5 | 37,8 | 29,8 | 32,4 | 617 |
| 10 | 750 | Durez Harz Typ 28391 | 750 | 50 | - | - | - | 753 |

| | | | | | | | | |
|---|---|---|---|---|---|---|---|---|
| *POF: Phosphororganische Flammschutzmittelkomponente | | | | | | | | |

**Tabelle 2:**

| Formkörper-Zusammensetzungen und Testergebnisse | | | | | | | |
|---|---|---|---|---|---|---|---|
| Beispiel | Formkörper-Zusammensetzung | | | | Formkörper-Austestung | | Bemerkungen |
| | *POF | **GFM | Glasfaser | Polyamid 6.6 | Visuell | UL94-Brandtest | |
| | Gew.-% | Gew.-% | Gew.-% | Gew.-% | - | - | - |
| 11 | 12,5 | - | 30 | 57,5 | Inhomogen | V-1 | POF: aus Bsp. 1 |
| 12 | - | 12,5 | 30 | 57,5 | Homogen | V-0 | GFM: aus Bsp. 1 |
| 13 | - | 12,5 | 30 | 57,5 | Homogen | V-0 | GFM: aus Bsp. 9 |
| 14 | | 20 | 30 | 50 | Homogen | V-0 | GFM: aus Bsp. 1 |

| | | | | | | | |
|---|---|---|---|---|---|---|---|
| *POF: Phosphororganische Flammschutzmittelkomponente | | | | | | | |
| **GFM: Granulare Flammschutzmittelzusammensetzung | | | | | | | |

## Patentansprüche

1. Granulare Flammschutzmittelzusammensetzung aus einer phosphororganischen Flammschutzkomponente und mindestens einem Binder.

2. Granulare Flammschutzmittelzusammensetzung nach Anspruch 1, **dadurch gekennzeichnet, dass** es sich bei der phosphororganischen Flammschutzkomponente um ein Phosphinsäuresalz der Formel (I) und/oder ein Diphosphinsäuresalz der Formel (II) und/oder deren Polymere (Komponente A) handelt, 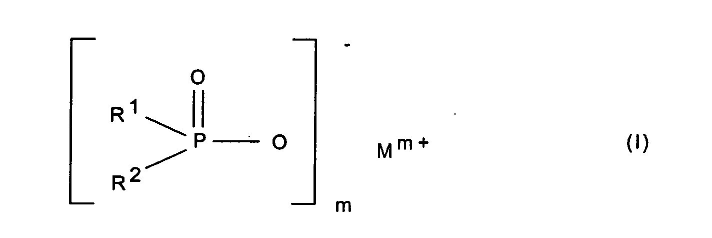 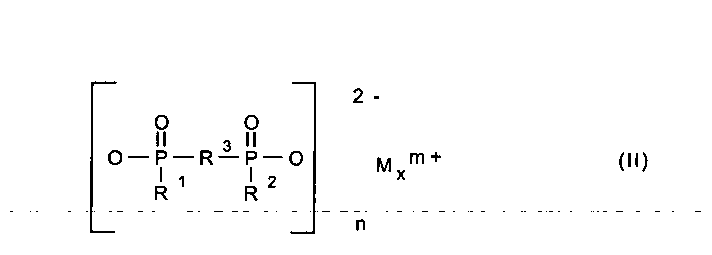 worin
R¹, R² gleich oder verschieden sind und C₁-C₆-Alkyl, linear oder verzweigt und/oder Aryl;
R³ C₁-C₁₀-Alkylen, linear oder verzweigt, C₆-C₁₀-Arylen, -Alkylarylen oder -Arylalkylen;
M Mg, Ca, Al, Sb, Sn, Ge, Ti, Zn, Fe, Zr, Ce, Bi, Sr, Mn, Li, Na, K und/oder eine protonierte Stickstoffbase;
m 1 bis 4;
n 1 bis 4;
x 1 bis 4
bedeuten.

3. Granulare Flammschutzmittelzusammensetzung nach Anspruch 1 oder 2, **dadurch gekennzeichnet, dass** M Calcium, Aluminium oder Zink bedeutet.

4. Granulare Flammschutzmittelzusammensetzung nach einem oder mehreren der Ansprüche 1 bis 3, **dadurch gekennzeichnet, dass** R¹, R² gleich oder verschieden sind und C₁-C₆-Alkyl, linear oder verzweigt und/oder Phenyl bedeuten.

5. Granulare Flammschutzmittelzusammensetzung nach einem oder mehreren der Ansprüche 1 bis 4, **dadurch gekennzeichnet, dass** R¹, R² gleich oder verschieden sind und Methyl, Ethyl, n-Propyl, iso-Propyl, n-Butyl, tert.-Butyl, n-Pentyl und/oder Phenyl bedeuten.

6. Granulare Flammschutzmittelzusammensetzung nach einem oder mehreren der Ansprüche 1 bis 5 **dadurch gekennzeichnet, dass** R³ Methylen, Ethylen, n-Propylen, iso-Propylen, n-Butylen, tert.-Butylen, n-Pentylen, n-Octylen oder n-Dodecylen; Phenylen oder Naphthylen; Methylphenylen, Ethylphenylen, tert.-Butylphenylen, Methylnaphthylen, Ethylnaphthylen oder tert.-Butylnaphthylen; Phenylmethylen, Phenylethylen, Phenylpropylen oder Phenylbutylen bedeutet.

7. Granulare Flammschutzmittelzusammensetzung nach einem oder mehreren der Ansprüche 1 bis 6, **dadurch gekennzeichnet, dass** sie und/oder die phosphororganische Flammschutzkomponente weiterhin Melaminphosphat, Dimelaminphosphat, Melaminpyrophosphat, Melaminpolyphosphate, Melampolyphosphate, Melempolyphosphate und/oder Melonpolyphosphate enthält.

8. Granulare Flammschutzmittelzusammensetzung nach einem oder mehreren der Ansprüche 1 bis 7, **dadurch gekennzeichnet, dass** sie und/oder die phosphororganische Flammschutzkomponente weiterhin Melaminkondensationsprodukte wie Melam, Metern und/oder Melon enthalten.

9. Granulare Flammschutzmittelzusammensetzung nach einem oder mehreren der Ansprüche 1 bis 8, **dadurch gekennzeichnet, dass** sie und/oder die phosphororganische Flammschutzkomponente weiterhin oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melamincyanurat, Dicyandiamid und/oder Guanidin enthalten.

10. Granulare Flammschutzmittelzusammensetzung nach einem oder mehreren der Ansprüche 1 bis 9, **dadurch gekennzeichnet, dass** sie und/oder die phosphororganische Flammschutzkomponente stickstoffhaltige Phosphate der Formeln (NH₄)_{y} H_{3-y} PO₄ bzw. (NH₄ PO₃)_{z}, mit y gleich 1 bis 3 und z gleich 1 bis 10.000, enthält.

11. Granulare Flammschutzmittelzusammensetzung nach einem oder mehreren der Ansprüche 1 bis 10, **dadurch gekennzeichnet, dass** sie und/oder die phosphororganische Flammschutzkomponente als Komponente B eine synthetische anorganische Verbindung und/oder ein mineralisches Produkt enthält.

12. Granulare Flammschutzmittelzusammensetzung nach einem oder mehreren der Ansprüche 1 bis 11, **dadurch gekennzeichnet, dass** es sich bei der Komponente B um eine Sauerstoffverbindung des Siliciums, um Magnesiumverbindungen, um Metallcarbonate von Metallen der zweiten Hauptgruppe des Periodensystems, um roten Phosphor, um Zink- oder Aluminiumverbindungen handelt.

13. Granulare Flammschutzmittelzusammensetzung nach einem oder mehreren der Ansprüche 1 bis 12, **dadurch gekennzeichnet, dass** sich bei den Sauerstoffverbindungen des Siliciums um Salze und Ester der Orthokieselsäure und deren Kondensationsprodukte, um Silikate, Zeolithe und Kieselsäuren, um Glas-, Glas-Keramik oder Keramik-Pulver; bei den Magnesiumverbindungen um Magnesiumhydroxid, Hydrotalcite, Magnesium-Carbonate oder Magnesium-Calcium-Carbonate; bei den Zinkverbindungen um Zinkoxid, -stannat, -hydroxystannat, - phosphat, -borat oder -sulfide; bei den Aluminiumverbindungen um Aluminiumhydroxid oder -phosphat handelt.

14. Granulare Flammschutzmittelzusammensetzung nach einem oder mehreren der Ansprüche 1 bis 13, **dadurch gekennzeichnet, dass** sie und/oder die phosphororganische Flammschutzkomponente als weitere Komponente C Stickstoffverbindungen enthält.

15. Granulare Flammschutzmittelzusammensetzung nach einem oder mehreren der Ansprüche 1 bis 14, **dadurch gekennzeichnet, dass** es sich bei den Stickstoffverbindungen um solche der Formeln (III) bis (VIII) oder Gemische davon 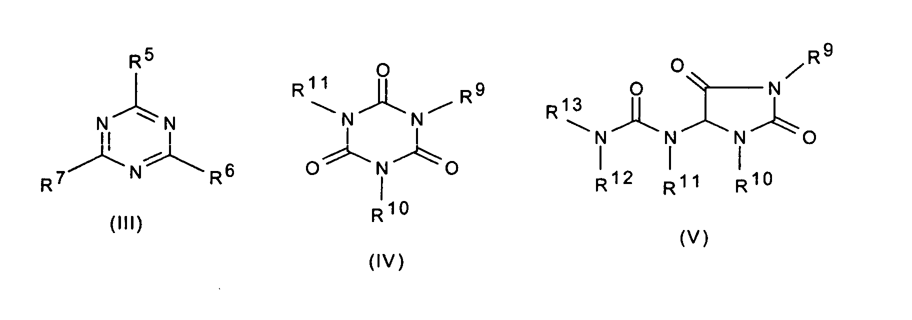 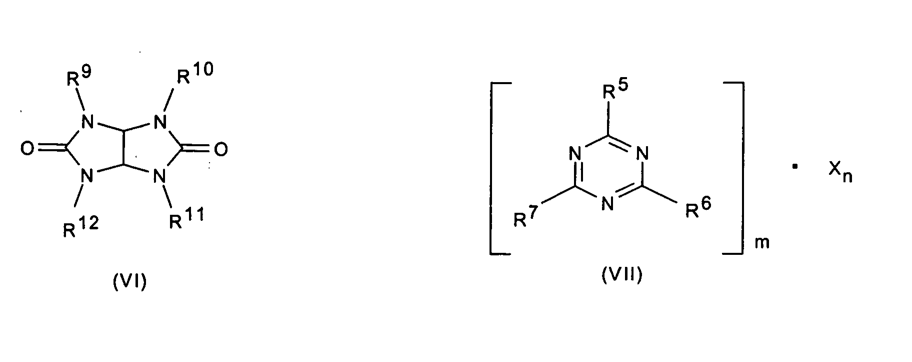 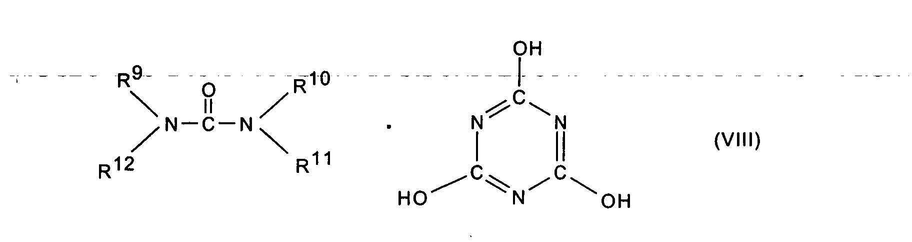 worin
R⁵ bis R⁷ Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁸ und - N(R⁸)R⁹, sowie N-alicyclisch oder N-aromatisch,
R⁸ Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder -Arylalkyl,
R⁹ bis R¹³ die gleichen Gruppen wie R⁸ sowie -O-R⁸,
m und n unabhängig voneinander 1, 2, 3 oder 4,
X Säuren, die Addukte mit Triazinverbindungen (III) bilden können,
bedeuten.

16. Granulare Flammschutzmittelzusammensetzung nach einem oder mehreren der Ansprüche 1 bis 15. **dadurch gekennzeichnet, dass** sie und/oder die phosphororganische Flammschutzkomponente weiterhin Carbodiimide enthalten.

17. Granulare Flammschutzmittelzusammensetzung nach einem oder mehreren der Ansprüche 1 bis 16, **dadurch gekennzeichnet, dass** es sich bei dem Binder um Alkylalkoxylate mit 8 bis 22 C-Atomen und 1 bis 80 EO-Einheiten pro Mol Alkohol handelt.

18. Granulare Flammschutzmittelzusammensetzung nach einem oder mehreren der Ansprüche 1 bis 16, **dadurch gekennzeichnet, dass** es sich bei dem Binder um Caprolactam und/oder Triphenylphosphat handelt.

19. Granulare Flammschutzmittelzusammensetzung nach einem oder mehreren der Ansprüche 1 bis 16, **dadurch gekennzeichnet, dass** es sich bei dem Binder um Ethylenglykol, Propylenglykol und/oder Butylenglykol, deren Oligomere und/oder Polymere und/oder deren Ether handelt.

20. Granulare Flammschutzmittelzusammensetzung nach einem oder mehreren der Ansprüche 1 bis 16, **dadurch gekennzeichnet, dass** es sich bei dem Binder um natürliche, chemisch modifizierte und/oder synthetische Wachse; bevorzugt um Carnaubawachse und Montanwachse, handelt.

21. Granulare Flammschutzmittelzusammensetzung nach einem oder mehreren der Ansprüche 1 bis 16, **dadurch gekennzeichnet, dass** es sich bei dem Binder um Kunstharze, bevorzugt Phenolharze, handelt.

22. Granulare Flammschutzmittelzusammensetzung nach einem oder mehreren der Ansprüche 1 bis 21, **dadurch gekennzeichnet, dass** sie eine mittlere Teilchengröße von 100 bis 10.000 µm, bevorzugt 200 bis 2000 µm aufweisen.

23. Granulare Flammschutzmittelzusammensetzung nach einem oder mehreren der Ansprüche 1 bis 22, **dadurch gekennzeichnet, dass** sie eine mittlere Schüttdichte von 200 bis 1500 g/l, bevorzugt 300 bis 800 g/l, aufweisen.

24. Granulare Flammschutzmittelzusammensetzung nach einem oder mehreren der Ansprüche 1 bis 23, **dadurch gekennzeichnet, dass** das Mengen-Verhältnis von Binder zu phosphororganischer Flammschutzkomponente 1 zu 99 bis 1 zu 0,11, bevorzugt 1 bis 49 bis 1 zu 0,25, besonders bevorzugt 1 zu 19 bis 1 zu 1 beträgt.

25. Verfahren zur Herstellung von granularen Flammschutzmittelzusammensetzungen nach mindestens einem der Ansprüche 1 bis 24, **dadurch gekennzeichnet, dass** man den Binder in flüssiger Form in einem geeigneten Mischer zu der bewegten phosphororganischen Flammschutzkomponente gibt und 0,01 bis 1 Stunden bei 50 bis 300°C gemischt wird.

26. Verfahren zur Herstellung von granularen Flammschutzmittelzusammensetzungen nach mindestens einem der Ansprüche 1 bis 24, **dadurch gekennzeichnet, dass** man den festen Binder in einem geeigneten Mischer zu der bewegten POF gibt, 0,01 bis 1 Stunden bei 50 bis 300°C gemischt und dabei bis zum Schmelzpunkt des Binders erhitzt wird.

27. Flammgeschützte Polymerformmasse, **dadurch gekennzeichnet, dass** sie eine granulare Flammschutzmittelzusammensetzung nach mindestens einem der Ansprüche 1 bis 24 enthält.

28. Flammgeschützte Polymerformmasse nach Anspruch 27, **dadurch gekennzeichnet, dass** sie
1 bis 50 Gew.-% granulare Flammschutzmittelzusammensetzung,
1 bis 99 Gew.-% thermoplastisches Polymer oder Mischungen derselben
0 bis 60 Gew.-% Additive
0 bis 60 Gew.-% Füllstoff enthält.

29. Flammgeschützte Polymerformmasse nach Anspruch 27 oder 28, **dadurch gekennzeichnet, dass** sie
5 bis 30 Gew.-% granulare Flammschutzmittelzusammensetzung,
5 bis 90 Gew.-% thermoplastisches Polymer oder Mischungen derselben
5 bis an Gew.-% Additive
5 bis 40 Gew.-% Füllstoff enthält.

30. Flammgeschützte Polymerformmasse nach einem oder mehreren der Ansprüche 27 bis 29, **dadurch gekennzeichnet, dass** sie weiterhin Komponenten B und/oder C enthalten.

31. Flammgeschützte Polymerformmasse nach einem oder mehreren der Ansprüche 27 bis 30, **dadurch gekennzeichnet, dass** es sich bei den thermoplastischen Polymeren um Polystyrol-Hl (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) handelt.

32. Flammgeschützte Polymerformmasse nach einem oder mehreren der Ansprüche 27 bis 31, **dadurch gekennzeichnet, dass** es sich bei den thermoplastischen Polymeren um Polyamid, Polyester oder ABS handelt.

33. Polymer-Formkörper, -Filme, -Fäden und -Fasern enthaltend eine granulare Flammschutzmittelzusammensetzung nach mindestens einem der Ansprüche 1 bis 24.

34. Polymer-Formkörper, -Filme, -Fäden und -Fasern nach Anspruch 33, **dadurch gekennzeichnet, dass** es sich bei dem Polymer um ein thermoplastisches oder duroplastisches Polymer handelt.

35. Polymer-Formkörper, -Filme, -Fäden und -Fasern nach Anspruch 33 oder 34, **dadurch gekennzeichnet, dass** es sich bei den thermoplastischen Polymeren um Polystyrol-Hl (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol), Polyamid, Polyester und/oder ABS handelt.

36. Polymer-Formkörper, -Filme, -Fäden und -Fasern nach Anspruch 33 oder 34, **dadurch gekennzeichnet, dass** es sich bei den duroplastischen Polymeren um Formaldehyd-, Epoxid-, Melamin- Phenolharz-Polymere und/oder Polyurethane handelt.

37. Polymer-Formkörper, -Filme, -Fäden und -Fasern nach einem oder mehreren der Ansprüche 33 bis 36, **dadurch gekennzeichnet, dass** sie
1 bis 50 Gew.-% granulare Flammschutzmittelzusammensetzung,
1 bis 99 Gew.-% Polymer oder Mischungen derselben
0 bis 60 Gew.-% Additive
0 bis 60 Gew.-% Füllstoff enthalten.

38. Polymer-Formkörper, -Filme, -Fäden und -Fasern nach einem oder mehreren der Ansprüche 33 bis 37, **dadurch gekennzeichnet, dass** sie
5 bis 30 Gew.-% granulare Flammschutzmittelzusammensetzung,
5 bis 90 Gew.-% Polymer oder Mischungen derselben
5 bis 40 Gew.-% Additive
5 bis 40 Gew.-% Füllstoff enthalten.
